Europäisches Patentamt

European Patent Office

Office européen des brevets

(19)

(11) Publication number: **0 329 272**

**A1**

## (12) EUROPEAN PATENT APPLICATION

(21) Application number: **89300376.4**

(22) Date of filing: **10.01.89**

(51) Int. Cl.⁴: **G01F 3/22 , G01F 15/06**

---

The title of the invention has been amended (Guidelines for Examination in the EPO, A-III, 7.3).

(30) Priority: **16.01.88 GB 8800973**

(43) Date of publication of application:
**23.08.89 Bulletin 89/34**

(84) Designated Contracting States:
**AT BE CH DE ES FR GB GR IT LI LU NL SE**

(71) Applicant: **THORN EMI Flow Measurement Limited**
**P.O. Box No. 3 Talbot Road**
**Stretford Manchester M32 OXX(GB)**

(72) Inventor: **Imiolek, Mieczyslaw**
**84 Mauldeth Road Withington**
**Manchester, M20 9NH(GB)**

(74) Representative: **Fleming, Ian Alexander et al**
**THORN EMI Patents Limited The Quadrangle**
**Westmount Centre Uxbridge Road**
**Hayes Middlesex, UB4 0HB(GB)**

---

(54) **Gas meter.**

(57) A gas meter (30) for measuring the volume of fluid passing therethrough, said meter including: a shaft (60); a displacement arrangement (58, 62) for causing a rotation of said shaft, said rotation being related to the volume of fluid passing through said meter (30); indicating means (70, 72) for indicating the volume of fluid passing through said meter; and coupling means (62, 68) between said shaft (60) and said indicating means (70, 72).

FIG 3

EP 0 329 272 A1

## IMPROVEMENTS RELATING TO GAS METERS

This invention relates to meters for measuring the volume of fluid passing therethrough, primarily but not exclusively to meters for measuring the consumption of town gas. In particular, this invention relates to the calibration and testing of such meters.

Conventionally, positive-displacement meters can be used to measure the consumption of town gas. The passage of gas through chambers in such meters causes the rotation of an output shaft, the number of revolutions of the output shaft being a measure of the volume of gas consumed. The output shaft is coupled to a test pointer which can move relative to a dial graduated in terms of the volume of gas passing through the meter. Ideally, in a common domestic metric gas meter, one revolution of the output shaft causes one revolution of the test pointer and corresponds to a nominal volume of gas passing through the meter, 10dm³ say. In meters having industrial and commercial application one revolution of the test pointer would correspond to a larger nominal volume of gas, 100 dm³ say.

The actual volume of gas displaced during each rotation of the output shaft depends, inter alia, on the accuracy with which the chambers in the meter, through which the gas passes, have been manufactured and, accordingly, it is necessary to test and, if required, calibrate each meter produced before it is sent out of the factory.

The usual method of testing a meter is by noting the volume of gas passed through the meter required to cause one revolution of the test pointer. For example, it may be found that 10.2dm³ of gas is required to produce one revolution of the test pointer in a metric domestic gas meter, but the graduation on the dial is such that one revolution of the test pointer would indicate a consumption of only 10dm³. In this case, therefore it would accordingly be preferable to make an adjustment to the meter such that one revolution of the output shaft produced 1.02 revolutions of the test pointer, which would then indicate, correctly, a displacement of 10.2 dm³.

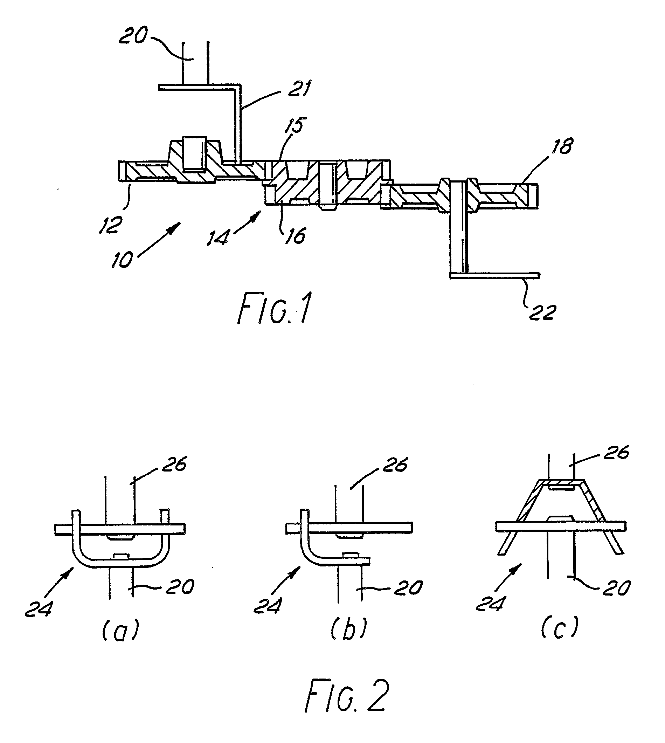

Conventionally, the possibility of making such an adjustment to calibrate the meter has been provided by an arrangement of gears associated with the test pointer. A typical gear arrangement 10, as shown in Figure 1, comprises a first gear 12 driving a compound gear 14 consisting of two gears 15, 16 which drives a fourth gear 18. The first gear 12 is coupled to the output shaft via an intermediate shaft 20 connected to a cranked index drive 21. The fourth gear 18 drives the test pointer 22. For a 1:1 ratio of revolutions of the index drive 21 to revolutions of the test pointer 22, the first gear 12 has 50 teeth, the compound gear 14 has 40 and 28 teeth, and the fourth gear 18 has 35 teeth. Gears having a different number of teeth may be substituted to adjust the ratio of revolutions of the index drive to revolutions of the test pointer and so calibrate the meter e.g. for the example already given, the substitution of the compound gear 14 by one having 39 and 28 teeth adjusts the ratio of revolutions of the index drive to revolutions of the test pointer to 1:1.02, and so the test pointer correctly shows that 10.2dm³ of gas has been consumed for one revolution of the output shaft.

In conventional gas meters where an adjustment to the ratio of the revolutions of the index drive to the revolutions of the test pointer has been made, the problem has arisen that, in repeated testing of the gas meter, the results have been inconsistent e.g. for the example already given, the adjusted meter might in three tests indicate that 10.2dm³ of gas had been consumed and then on the fourth test indicate that 10.5dm³ had been consumed (an error of nearly 3%). It is found that the greater the change from a 1:1 ratio of the ratio of the revolutions of the index drive to revolutions of the test pointer, the greater the inconsistency in the test results. It has thus been difficult to decide what arrangement of gears to use in order to indicate the true volume of gas passing through the meter. Furthermore, the inconsistency of the error has meant that the manufacturer might pass a meter as being within the required tolerance which is then tested and rejected by the purchaser. This can be expensive because not only is the inconsistent meter tested rejected but also the whole batch of meters together with which the inconsistent meter was manufactured which may number 1000.

Previous attempts to overcome this problem, which has taxed workers in the field for many years, have concentrated on the realisation that the problem appears to be caused by what is known as a broken linkage which couples the output shaft to the intermediate shaft and the consequent possibility of misalignment of the two shafts.

Examples of 'broken linkages' 24 are illustrated in Figure 2 of the accompanying drawings, in which the numeral 26 references the output shaft and the numeral 20 references the intermediate shaft. Such broken linkages are provided for ease of manufacture of the gas meter, allowing the intermediate shaft (and the associated indicating mechanism) to be coupled to the output shaft during the final stages of assembly. One solution to the problem has been to provide gas meters in which the ouput shaft and the intermediate shaft have been manufactured as one shaft but this is both expensive and causes problems in the manufacture of the gas meter. Attempts have also been made to minimise the misalignment of the output shaft and the intermediate shaft but this has proved difficult, complex and expensive.

It is an object of the present invention to provide a meter for measuring the consumption of gas which at least alleviates some of the problems outlined hereinbefore.

In accordance with the present invention, there is provided a meter for measuring the volume of fluid passing therethrough, said meter including:
a shaft;
a displacement arrangement for causing a rotation of said shaft, said rotation being related to the volume of fluid passing through said meter;
indicating means for indicating the volume of fluid passing through said meter;
and a coupling between said shaft and said indicating means, said coupling including:
coupling means positioned between said shaft and said indicating means, said coupling means including a broken linkage;
and adjusting means for adjusting the coupling between said shaft and said indicating means, so as to calibrate said indicating means;
wherein said adjusting means is positioned between and coupled to said shaft and said coupling means.

It has been found that such meters may be adjusted to correct for manufacturing tolerances without producing unacceptable inconsistencies in the testing thereof.

Preferably one complete revolution of said indicating means is produced by an integer number of revolutions of said broken linkage, and said integer may be one.

Alternatively, a further adjusting means may be provided between said coupling means and said indicating means to allow fine calibration of said indicating means.

Preferably said adjusting means and/or said further adjusting means comprises an arrangement of gears, consisting of two or more gears, each having a defined number of teeth, and said coupling between said shaft and said indicating means is adjusted and/or said fine calibration of said indicating means is made by the substitution of one gear by a gear having a different number of teeth.

Preferably said arrangement of gears consists of a first gear driving a second gear, said second gear having a common axis with and joined to a third gear, said third gear driving a fourth gear, wherein said first and fourth gears are coaxial.

Preferably said adjusting means is enclosed within a housing, said housing comprising a first part and a second part, said second part being arranged to co-operate with said first part to enclose said adjusting means, and said second part being movable in relation to said first part to provide access to said adjusting means.

Said second part may provide a bearing for said fourth gear. Preferably said housing is made of a plastics material.

The invention will now be described by way of example and with reference to the accompanying drawings in which:
Figure 1 is a sectional view of a known arrangement of gears used in the calibration of known gas meters;
Figure 2 shows examples of known broken linkages;
Figure 3 is a part perspective view of a gas meter in accordance with the invention;
Figure 4 is a sectional view, in detail, of the part of the gas meter of Figure 3 indicated generally by the box A, with certain parts omitted for clarity.

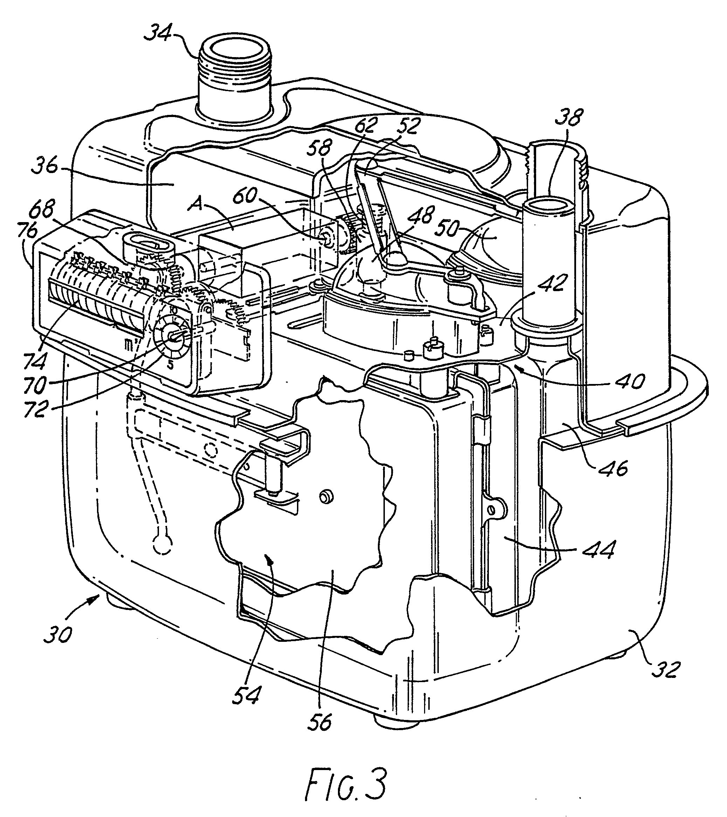

Figure 3 shows a metric domestic gas meter 30 having a casing 32, an inlet pipe 34 leading into an inlet space 36 and an outlet pipe 38 leading from an outlet space 40. The inlet space 36 and outlet space 40 are separated by a partition 42. Two chambers 44, 46 are provided, each chamber being divided into two sections 54 (one visible in chamber 44) separated by a moveable diaphragm 56 (visible in chamber 44). Each chamber 44, 46 has two inlet ports (not visible), one associated with each section, leading from the inlet space 36 and an outlet port (not visible), common to both sections, opening into the outlet space 40. Passage of gas into and out of the sections in the chambers 44, 46 is controlled by a respective slide valve 48, 50. The two slide valves 48, 50 are connected by a linkage 52 such that only one inlet port is open at one time.

In use, gas passes via the inlet pipe 34 into the inlet space 36 and via the one open inlet port into its section 54. The increase of pressure in this section 54 causes the diaphragm 56 to move, forcing gas out of the other section of that chamber via the common outlet port for that chamber into the outlet space 40 and out of the meter via the outlet pipe 38. The movement of the diaphragm 56 also causes the movement of the slide valves 48, 50 such that an inlet port of the other chamber is opened. The motion is repeated with each of the inlet ports being opened in turn. A cycle with each one of the four inlet ports being opened in turn, allowing passage of a fixed volume of gas through the meter causes, via a linkage, one revolution of a vertical shaft 58. For a metric domestic gas meter, this fixed volume of gas is ideally $2dm^3$.

The vertical shaft 58 is coupled to a horizontal shaft, the output shaft 60, via a worm gear 62, such that five revolutions of the vertical shaft 58 causes one revolution of the output shaft 60. Accordingly, one revolution of the output shaft 60 corresponds to a nominal volume of gas (i.e. 10dm$^3$ for this example), but in practice the actual volume of gas displaced may be somewhat different due to tolerances in the manufacture of the chambers.

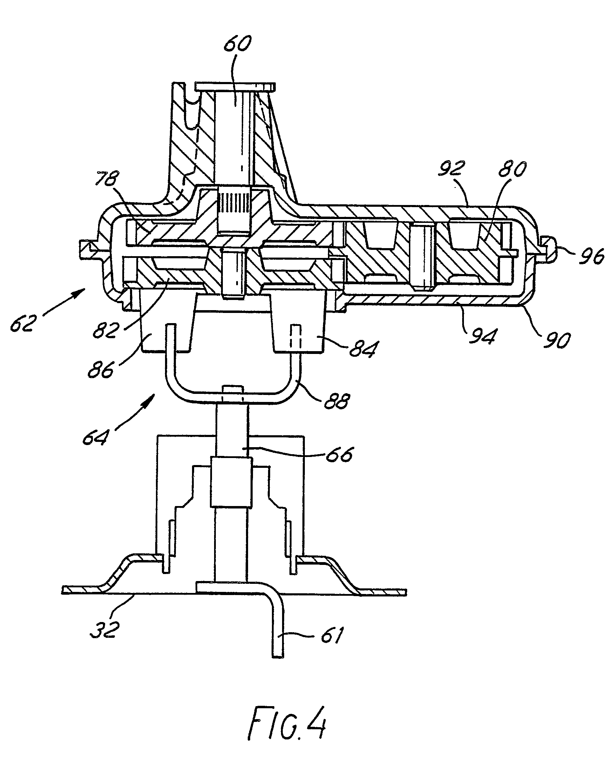

Figure 4 is a sectional view, in detail, of the part of the gas meter 30 indicated generally by the box A, with certain parts omitted for clarity. As shown in Figure 4, the output shaft 60 is coupled to an index drive 61 via a first gear ratio change module 62, a broken linkage 64 and an intermediate shaft 66.

Referring back to Figure 3, the index drive 61 (not visible in Figure 3) drives a second gear ratio change module 68 which drives the test pointer 70 on the dial 72. The second gear ratio change module 68, test pointer 70 and dial 72 are housed together with a counting mechanism 74, which is coupled to the second gear ratio change module 68 and indicates the volume of gas consumed, in a separate housing 76 outside the casing 32 of the gas meter 30.

Referring to Figure 4, the first gear ratio change module 62 is an arrangement of gears comprising a first gear 78 fixed to the output shaft 60, and arranged to drive a compound gear 80, which is in turn arranged to drive an output gear 82. The output gear 82 has integral drive vanes 84, 86 arranged to drive a U-shaped pin 88 on the intermediate shaft 66. The integral drive vanes 84, 86 and the U-shaped pin 88 form the broken linkage 64. In this example, for a 1:1 ratio of revolutions of the output shaft to revolutions of the intermediate shaft, the first gear 78 has 50 teeth, the compound gear 80 has 40 and 28 teeth, and the output gear 82 has 35 teeth.

The first gear ratio change module 62 is housed in a plastics housing 90 comprising a first part 92 which is fixed and remains stationary with respect to the casing 32, and a second part 94 hinged to the first part 92 at a point 96. The housing 90 may be opened to provide access to the arrangement of gears.

The meter 30 is tested, before the intermediate shaft 66 is placed in position, to determine the volume of gas consumed for one revolution of the output shaft 60. If necessary, gears having a different number of teeth may be substituted for those in the first gear ratio change module 62 to adjust the ratio of revolutions of the output shaft 60 to revolutions, when in position, of the intermediate shaft 66 and so calibrate the meter.

In repeated testing of complete gas meters provided in accordance with the invention, results of tests comparing the volume of gas consumed with the volume indicated by the test pointer were more consistent than in repeated testing of prior art gas meters.

The second gear ratio change module 68, in which the arrangement of gears is as shown in Figure 1, may be provided with gears to give a 1:1 ratio of revolutions of the index drive 61 to revolutions of the test pointer 70. However, it is also envisaged that fine calibration of the gas meter may be made by the substitution of gears in this second gear ratio charge module 68, as the inconsistency in the test results on prior art gas meters was less for those meters having a smaller change from the 1:1 ratio.

## Claims

1. A meter for measuring the volume of fluid passing therethrough, said meter including:
a shaft;
a displacement arrangement for causing a rotation of said shaft, said rotation being related to the volume of fluid passing through said meter;
indicating means for indicating the volume of fluid passing through said meter;
and a coupling between said shaft and said indicating means, said coupling including:
coupling means positioned between said shaft and said indicating means, said coupling means including a broken linkage;
and adjusting means for adjusting the coupling between said shaft and said indicating means, so as to calibrate said indicating means;
wherein said adjusting means is positioned between and coupled to said shaft and said coupling means.

2. A meter according to Claim 1, the rotation of said shaft producing a rotation of said coupling, including a rotation of said broken linkage and hence a rotation of said indicating means wherein one complete revolution of said indicating means is produced by an integer number of revolutions of said broken linkage.

3. A meter according to Claim 2 wherein said integer is one.

4. A meter according to Claim 1 wherein a further adjusting means is provided between said coupling means and said indicating means to allow fine calibration of said indicating means.

5. A matter according to any of the preceding claims wherein said adjusting means and/or said further adjusting means comprises an arrangement of gears consisting of two or more gears, each having a defined number of teeth, and said coupling between said shaft and said indicating means is adjusted and/or said fine calibration of said indicating means is made by the substitution of one gear by a gear having a different number of teeth.

6. A meter according to Claim 5 in which said arrangement of gears consists of a first gear driving a second gear, said second gear having a common axis with and joined to a third gear, said third gear driving a fourth gear, wherein said first and fourth gears are coaxial.

7. A meter according to any of the preceding claims wherein said adjusting means is enclosed within a housing, said housing comprising a first part and a second part, said second part being arranged to co-operate with said first part to enclose said adjusting means, and said second part being movable in relation to said first part to provide access to said adjusting means.

8. A meter according to Claim 7 dependent on Claim 6 wherein said second part of said housing provides a bearing for said fourth gear.

9. A meter according to Claims 7 or 8 wherein said housing is made of a plastics material,

10. A meter for measuring the volume of fluid passing therethrough substantially as described herein with respect to Figures 3 and 4 of the accompanying drawings.

*FIG.1*

*(a)*       *(b)*       *(c)*

*FIG.2*

FIG.3

FIG.4

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | <u>DE - B2 - 2 359 837</u> (MÖLLING)<br>* Totality; especially column 1, lines 49-55 * | 1-5 | G 01 F 3/22<br>G 01 F 15/06 |
| | -- | | |
| A | <u>DE - A1 - 2 816 710</u> (ANDRAE & CO.)<br>* Fig. 2 * | 1-3,5,6 | |
| | -- | | |
| A | <u>US - A - 4 080 827</u> (ESOLA)<br>* Fig. 3; abstract * | 5,6 | |
| | ---- | | |

TECHNICAL FIELDS SEARCHED (Int. Cl.4)

G 01 F 3/00

G 01 F 15/00

G 01 F 25/00

The present search report has been drawn up for all claims

| Place of search | Date of completion of the search | Examiner |
|---|---|---|
| VIENNA | 10-04-1989 | BURGHARDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82